(19)

Europäisches
Patentamt
European
Patent Office
Office européen
des brevets

(11) **EP 3 228 452 A1**

(12) **EUROPEAN PATENT APPLICATION**

(43) Date of publication:
**11.10.2017 Bulletin 2017/41**

(51) Int Cl.:
**B32B 7/12** *(2006.01)*          **B32B 27/28** *(2006.01)*
**C09D 179/08** *(2006.01)*

(21) Application number: **17158665.4**

(22) Date of filing: **01.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.04.2016 TW 105110494**

(71) Applicant: **Microcosm Technology Co., Ltd.
Tainan City (TW)**

(72) Inventors:
• **LIOU, GUEY-SHENG
Taipei City (TW)**
• **CHOU, CHIN-YEN
Taipei City (TW)**
• **LIU, HUAN-SHEN
Taipei City (TW)**

(74) Representative: **Meissner Bolte Partnerschaft
mbB
Widenmayerstrasse 47
80538 München (DE)**

(54) **FLEXIBLE AND TRANSPARENT POLYIMIDE LAMINATE AND MANUFACTURING METHOD THEREOF**

(57)    The present invention relates to a flexible and transparent polyimide laminate and manufacturing method thereof. The flexible and transparent polyimide laminate comprises a conductive layer, an adhesive layer and a polyimide substrate. The conductive layer includes a plurality of metal nanowires, and is attached on the polyimide substrate by the adhesive layer. The adhesive layer is an insoluble polyimide film and is polymerized by aromatic dianhydride and one of the following monomer: alicyclic diamines, fluorine-containing diamines, and the combination thereof.

<u>100</u>

FIG.1

**Description**

**BACKGROUND OF THE INVENTION**

**FIELD OF THE INVENTION**

The present invention relates to a flexible and transparent polyimide laminate and manufacturing method thereof and, more particularly, to a polyimide laminate having a conductive layer attached to a substrate by using organically insoluble polyimide as a binder and manufacturing method thereof.

**DESCRIPTION OF THE PRIOR ART**

In recent years, flexible electronic products, such as rollable and flexible liquid crystal displays, OLED, thin-film solar cells, etc. have gained much attention due to these products' characteristics of light weight and ultra-thin components. Currently, the indium tin oxide (ITO) film prepared by chemical vapor deposition (CVD) has become the most widely used material because of its excellent optical transparency and conductivity. However, ITO film is brittle and easily damaged when being subject to bending, which severely limits its application in the flexible substrate. In addition, the limitations of lack of indium sources, high deposition temperatures, and expensive vacuum evaporation equipment have encouraged manufacturers to look for alternative low-cost and flexible materials.

Conductive polymers, carbon nanotubes (CNTs), graphene and metal nanowires are all alternative materials that are highly expected. Conductive polymers have flexibility and conductivity, but it has higher surface electric resistance and stronger optical absorption, so only the conductive polymer cannot meet the requirements of practical applications. In addition, carbon nanotubes and graphene need to be prepared by chemical vapor deposition, which requires equipment of higher cost. Thus, the metal nanowires are considered one of the potential materials that will most likely replace indium tin oxide in the future.

In the conventional process that uses metal nanowires to form the conductive film, the metal nanowires are dispersed in the solvent, which is then coated to form a conductive film. Such preparation method is simple, but the adhesion between the metal nanowires and the matrix is poor, which is prone to peeling. Moreover, the nanowire dispersion has extremely low viscosity and is likely to flow during coating, resulting in non-uniform coating and agglomeration issues.

**SUMMARY OF THE INVENTION**

In view of the above issues, the present invention provides a flexible and transparent polyimide laminate, which uses the organically insoluble and transparent polyimide as the binder or protector to improve the disadvantage of easy peeling for metal nanowires. Also, the organically insoluble characteristic prevents the conductive layer from erosion by the solvent, which increases the flexibility of the subsequent processes.

According to an embodiment of the present invention, a flexible and transparent polyimide laminate is provided. The flexible and transparent polyimide laminate includes a conductive layer, an adhesive layer, and a transparent polyimide substrate. The conductive layer comprises a plurality of metal nanowires. The adhesive layer is made of an organically insoluble and transparent polyimide. The conductive layer is attached to the transparent polyimide substrate by the adhesive layer. The adhesive layer is formed by dehydration-cyclization of an aromatic dianhydride with one of the following materials: an alicyclic diamine, a fluorine-containing diamine, and a combination thereof.

According to another embodiment of the present invention, a method for manufacturing a flexible and transparent polyimide laminate is provided. The method includes coating a matrix with a solution containing a plurality of metal nanowires to form a preliminary conductive layer; coating the preliminary conductive layer with a polyamic acid solution; heating the polyamic acid solution coated on the preliminary conductive layer to form an adhesive layer by cyclization; coating the adhesive layer with a polyimide, which is then dried to form a substrate; removing the matrix from the preliminary conductive layer. The polyamic acid solution is formed by polymerization of an aromatic dianhydride with one of the following materials: an alicyclic diamine, a fluorine-containing diamine, and a combination thereof.

To make the above and other aspects of the present invention more clear and understandable, the following embodiments are illustrated in detail with reference to the accompanying drawings.

**BRIEF DESCRIPTION OF THE DRAWINGS**

Fig. 1 schematically illustrates the structure of the flexible and transparent polyimide laminate according to the embodiments of the present invention;

Fig. 2(a) is a graph showing the relationship between the transmittance at a wavelength of 550 nm and the sheet resistance of the flexible and transparent polyimide laminates made of silver nanowires having different aspect ratios;

Fig. 2(b) illustrates the visible light transmittances of organically insoluble polyimide and highly transparent polyimide, each of which has a thickness of 30 microns;

Figs. 3(a)-3(e) illustrate the manufacturing process of the flexible and transparent polyimide laminates of the present invention;

Figs. 4(a)-4(e) show the FTIR spectra of the various synthesis examples of the polyimide polymers being the adhesive layer and the substrate in the present invention, and illustrate the compositions of the synthesis examples of such polyimide polymers;

Fig. 5 is the scanning electron microscopy image (SEM image) of the silver nanowires contained in the conductive layer of the flexible and transparent polyimide laminates of the present invention;

Fig. 6 shows the UV-Vis spectra of the laminates with different conductivities prepared according to the method of the present invention;

Fig. 7 illustrates the relationships between figure of merit and the sheet resistance as well as the transmittance at a wavelength of 550 nm and the sheet resistance with respect to the flexible and transparent polyimide laminates of the present invention;

Figs. 8(a)-8(b) are the SEM images of the flexible and transparent polyimide laminates of the present invention at different magnifications; and

Figs. 9(a)-9(b) illustrate the test results of chemical resistance of the flexible and transparent polyimide laminate of the present invention and the traditional polyimide laminate, respectively.

## DETAILED DESCRIPTION OF THE EMBODIMENTS

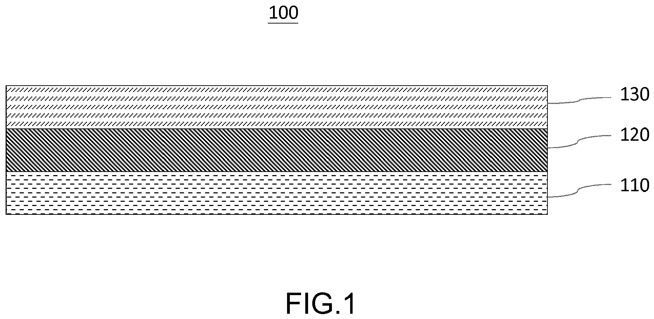

With reference to Fig. 1, which is a schematic diagram of the structure of the flexible and transparent polyimide laminate 100 provided according to a specific embodiment of the present invention. The flexible and transparent polyimide laminate 100 of the present invention includes a three-layer structure composed of the conductive layer 130, the adhesive layer 120, and the transparent polyimide substrate 110. The conductive layer 130 comprises a plurality of metal nanowires. The adhesive layer 120 is made of an organically insoluble and transparent polyimide, and is formed by dehydration-cyclization of an aromatic dianhydride with one of the following materials: an alicyclic diamine, a fluorine-containing diamine, and a combination thereof. The conductive layer 130 is attached to the transparent polyimide substrate 110 by the adhesive layer 120.

According to the present invention, the metal of the metal nanowires contained in the conductive layer 130 is preferably selected from the group consisting of gold, silver, copper, nickel, and titanium. The metal nanowires are preferably silver nanowires, which could be prepared by modified polyol process. The silver nanowires may have **a length between 10 μm and 100 μm, a diameter between 20 nm and 100 nm,** and an average aspect ratio (length/diameter, L/D) greater than 400, and more preferably between 500 and 600.

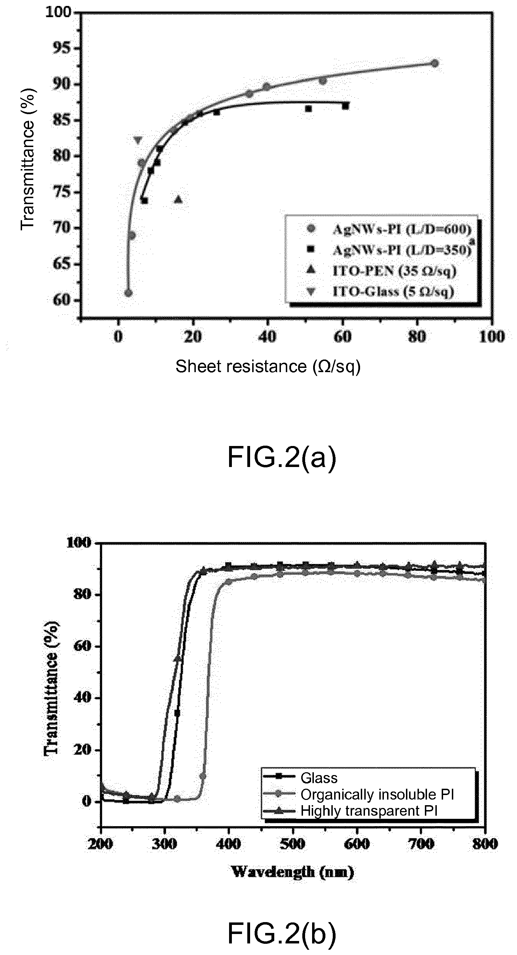

According to the present invention, the aspect ratio of the metal nanowires in the conductive layer 130 will affect the light transmittance of the conductive layer 130. As shown in Fig. 2(a), which illustrates the relationship between the transmittance at a wavelength of 550 nm and the sheet resistance of the flexible and transparent polyimide laminates comprising the conductive layers made of silver nanowires having aspect ratios (L/D) of 350 and 600, respectively. It can be seen from the graph that the greater the aspect ratio of the silver nanowires used to form the conductive layers, the higher the light transmittance of the laminates at the same resistivity, which helps to enhance the transmittance of the transparent conductive film and reduce the sheet resistance of the conductive layer.

The organically insoluble and transparent polyimide adhesive layer 120 described above is used as the binder or protector of the conductive layer for protecting the metal nanowires in the conductive layer. As compared with the conductive layer formed by coating in the prior art, the adhesive layer employed in the present invention can improve the disadvantage of being prone to peeling metal nanowires, prevent the conductive layer containing the metal nanowires from erosion by solvents, and increase flexibility of the subsequent processes.

As used herein, "organically insoluble" refers that the transparent polyimide adhesive layer of the present invention won't dissolve in the organic solvent after being immersed in the organic solvent at room temperature and/or being heated to boiling point for 5 hrs. The organic solvent is the commonly used solvent, such as N,N-dimethylformamide (DMF), N,N-dimethylacetamide (DMAc), N,N-diethylacetamide, N-methylpyrrolidone (NMP), dimethyl sulfoxide (DMSO), m-cresol, dichloromethane, tetrahydrofuran (THF), chloroform, or acetone, etc.

The organically insoluble and transparent polyimide adhesive layer described above can be formed by dehydration-cyclization of an aromatic dianhydride with one of the following materials: an alicyclic diamine, a fluorine-containing diamine, and a combination thereof. The fluorine atom in the fluorine-containing diamine can reduce the charge transfer by its ability of strong electrons withdrawing. The aliphatic structure in the aliphatic diamine can prevent the charge transfer between the molecular chains or within the chains of the molecular. Such monomer can form colorless polyimide with high transparency, and thus has advantages in optical applications.

According to the present invention, the thickness of the adhesive layer 120 is between 0.1 and 5 $\mu$m, preferably between 0.1 and 1 $\mu$m, and more preferably between 0.1 and 0.5 $\mu$m.

The aromatic dianhydride described above comprises: pyromellitic dianhydride, 3,3',4,4'-biphenyl tetracarboxylic dianhydride, 2,2-bis(3,4-dicarboxyphenyl)hexafluoropropionic acid dianhydride, 4-(2,5-dioxo-tetrahydrofuran-3-yl)-1,2,3,4-tetrahydronaphthalene-1,2-dicarboxylic anhydride. Alicyclic diamines comprises: 1,4-cyclohexane diamine, 4,4'-diamino dicyclohexyl methane, 1,4-cyclohexane dimethyl amine. The fluorine-containing diamines comprises: 2,2'-bis(trifluoromethyl)-benzidine, and 2-trifluoromethyl-benzidine. It is of particular note that, the organically insoluble and transparent polyimide adhesive layer is not limited to being prepared by using only one of the aromatic dianhydrides, the alicyclic diamines, or the fluorine-containing diamines, i.e., the adhesive layer can be prepared by using two or more of the aromatic dianhydrides, two or more of the alicyclic diamines, or two or more of the fluorine-containing diamines.

According to the present invention, the transparent polyimide substrate 110 described above uses highly transparent polyimide as the raw material, and the visible light transmittance thereof at a thickness of 30 $\mu$m is greater than 90%, thereby the overall visible light transmittance of the finished flexible and transparent polyimide laminates can be increased. As shown in Fig. 2(b), the flexible and transparent polyimide laminates of the present invention uses highly transparent polyimide substrate as the substrate, which is combined with the adhesive layer made of the organically insoluble polyimide (0.1-5 $\mu$m in thickness) to increase the visible light transmittance of the laminates of the present invention to 90%, as compared with the organically insoluble polyimide being used as the adhesive layer and the substrate simultaneously (30 $\mu$m in thickness, with 85% of visible light transmittance).

The transparent polyimide substrate of the present invention is formed by dehydration-cyclization of a dianhydride and a diamine, wherein the dianhydride comprises: pyromellitic dianhydride, 3,3',4,4'-biphenyltetracarboxylic dianhydride, 2,2-bis(3,4-dicarboxyphenyl)hexafluoropropionic acid dianhydride, 3,3',4,4'-benzophenone tetracarboxylic dianhydride, 3,3',4,4'-diphenyl ether tetracarboxylic dianhydride, 1,2,3,4-butane tetracarboxylic dianhydride, 1,2,3,4-cyclobutane tetracarboxylic dianhydride, 1,2,4,5-cyclohexane tetracarboxylic dianhydride, bicyclo(2,2,2)oct-7-ene-2,3,5,6-tetracarboxylic dianhydride, bicyclo(2,2,2)octane-2,3,5,6-tetracarboxylic dianhydride, 1,4-cyclohexane bistrimellitic dianhydride, 4-(2,5-dioxo-tetrahydrofuran-3-yl)-1,2,3,4-tetrahydronaphthalene-1,2-dicarboxylic anhydride, which may be used alone or in a combination thereof. The diamine comprises: 2,2'-bis(trifluoromethyl)-benzidine, 2-trifluoromethyl-benzidine, 2,2-bis(4-aminophenyl)hexafluoropropane, 4,4'-diamino diphenyl ether, 2,2'-dimethyl-4,4'-diaminobiphenyl, 3,3'-diamino diphenyl sulfone, 4,4'-diamino diphenyl sulfone, 4,4'-diamino-diphenyl methane, 2-bis(4-(4-aminophenoxy)phenyl)propane, 2,2-bis(4-(4-aminophenoxy)phenyl)hexafluoropropane, 1,3-bis(3-aminopropyl)-1,1,3,3-tetramethyldisiloxane, 1,4-cyclohexane diamine, 4,4'-diamino dicyclohexyl methane, 1,4-cyclohexane dimethyl amine, which may be used alone or in a combination thereof.

The thickness of the transparent polyimide substrate 110 described above is between 10 $\mu$m and 100 $\mu$m, preferably between 10 $\mu$m and 50 $\mu$m, and more preferably between 10 $\mu$m and 30 $\mu$m.

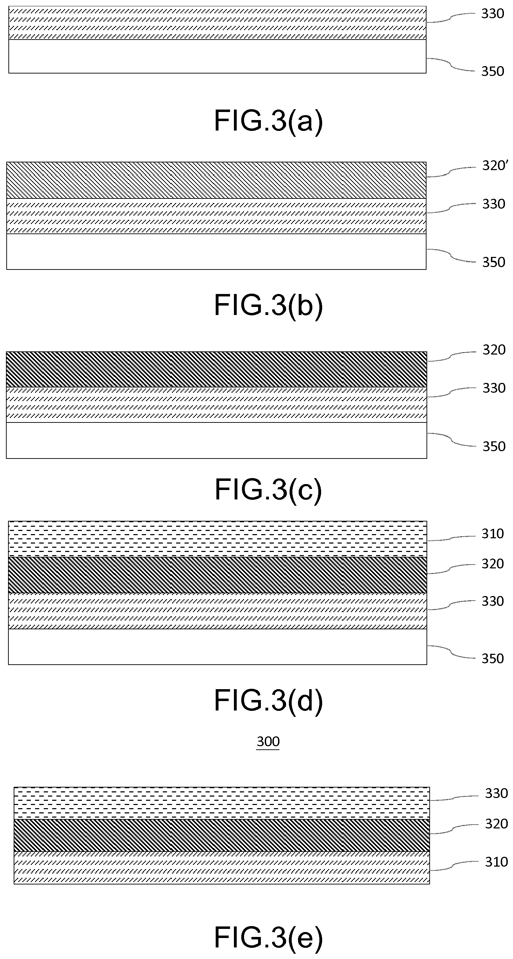

The present invention further provides a method for manufacturing the flexible and transparent polyimide laminate described above. The method for manufacturing the flexible and transparent polyimide laminate of the present invention comprises the following steps: (1) coating a matrix 350 with a solution containing the metal nanowires described above to form a preliminary conductive layer 330, as shown in Fig. 3(a); (2) coating the preliminary conductive layer 330 with a coating of a polyamic acid solution 320', as shown in Fig. 3(b), (3) heating under vacuum so that the polyamic acid solution coated on the preliminary conductive layer 330 undergoing cyclization to form an adhesive layer 320, as shown in Fig. 3(c); (4) coating the adhesive layer with polyimide, which is then dried to form a substrate 310, as shown in Fig. 3(d); and (5) removing the matrix 350 from the preliminary conductive layer to form the flexible and transparent polyimide laminate 300, as shown in Fig. 3(e).

In step (1) described above, the metal nanowires are dispersed in a suitable solvent to form a solution containing metal nanowires (hereinafter referred to as "the metal nanowire solution"). The solvent is, for example, water, alcohols (ethanol, propanol, etc.), ketones (acetone), toluene, hexane, dimethylformamide, tetrahydrofuran, esters (ethyl acetate), ethers, hydrocarbons, aromatic solvents (xylene), propylene glycol monomethyl ether (PGME), propylene glycol monomethyl ether acetate (PGMEA), etc., or a combination thereof. The metal nanowire solution can be coated on the matrix by any coating method, such as spin coating, dip coating, spray coating, bar coating, slit coating, wire-bar wet film coating, etc., and then dried by heating to form the preliminary conductive layer. The method of drying by heating can be, for example, placing the matrix coated with the metal nanowire solution in the vacuum oven at approximately 80-100 °C for drying.

In the present invention, "matrix" refers to the support substance on which the metal nanowire solution is coated and dried, and includes: the plastic substrates, such as polyimides, polyamides; metal substrates, such as copper, aluminum, stainless steel; or glass substrates, etc.

In step (2) described above, the polyamic acid solution is the precursor of the organically insoluble polyimide adhesive layer of the present invention. The polyamic acid solution is formed by polymerization of the aromatic dianhydride with alicyclic diamine and/or fluorine-containing diamine. The polyamic acid solution is dehydrated to undergo cyclization and the organically insoluble polyimide adhesive layer (whose material is the same as what is described from paragraph [0024] through paragraph [0026]) is thus obtained. Detailed method for producing the organically insoluble polyimide adhesive layer is to coat the preliminary conductive layer of step (1) with the precursor (polyamic acid solution) by coating method, such as spin coating, dip coating, spray coating, screen printing method, flexographic printing method, bar coating, slit coating, wire-bar wet film coating, etc., and then the polyamic acid solution undergoes cyclization to form the polyimide adhesive layer.

In step (3) described above, the polyamic acid solution is heated to undergo ring-closing. The heating can be controlled to reach the annealing temperature of the metal nanowires. Annealing can reduce the resistance of the metal nanowires, and the annealing temperature can vary depending on the material quality and the aspect ratio of the metal nanowires. During the manufacturing of the metal nanowires, there might be polymer covering agent remaining on the metal nanowires. Some of the covering agent may be decomposed when being heated to the annealing temperature. In addition, if the silver nanowires having lower melting point (a melting point of 200°C) is employed, annealing can melt a portion of the sliver wires, reduce the contact resistance between wires, lower the resistivity of the conductive layer, and increase the conductivity.

In step (4) described above, the substrate is the transparent polyimide substrate described above. The polyimide used in the substrate is highly transparent polyimide, which is made from the materials described in paragraph [0028]. The polymerization method of highly transparent polyimide may use solvent to dissolve the dianhydride monomers and the diamine monomers, respectively. Then the dissolved dianhydride monomers and the dissolved diamine monomers are mixed to react with each other and form the polyamic acid solution, which further undergoes dehydration-cyclization at 250-350 °C. Also, the catalyst may be added to facilitate dehydration. The polyimide obtained after the dehydration-cyclization is coated on the adhesive layer and then dried to form the highly transparent polyimide substrate described in the present invention.

Finally, as described in step (5), the matrix is peeled/removed from the preliminary conductive layer, and the flexible and transparent polyimide laminate of the present invention is finished. This preparation method first forms the preliminary conductive layer on the matrix and then forms the adhesive layer on the preliminary conductive layer. The two-layer structure of the preliminary conductive layer/the adhesive layer is then transfer-printed by the adhesive layer to the transparent polyimide substrate. Finally, the matrix is removed to obtain the flexible and transparent polyimide laminate.

The flexible and transparent polyimide laminate of the present invention has the following advantages: smooth product surface, when applied to a variety of devices, results in more uniform coloring and coating; using organically insoluble polyimide as the binder not only is high temperature durable, but also prevents the metal nanowires from peeling due to the organic solvent; the annealing of the metal nanowires and the cyclization of the adhesive layer are carried out in the same step, which simplifies the preparation process; the polyimide is coated onto the conductive layer having the metal nanowires, in which the gravity makes the network formed by the metal nanowires denser and further facilitates the reduction of the resistance value; using highly transparent polyimide as the substrate increases the visible light transmittance of the flexible and transparent polyimide laminate.

In addition, both the adhesive layer (organically insoluble polyimide) and the substrate (highly transparent polyimide) of the flexible and transparent polyimide laminate of the present invention have a glass transition temperature of greater than 320°C, and have a temperature of greater than 450°C after 5wt% of which has been pyrolyzed in the air. Therefore, the flexible and transparent polyimide laminate product of the present invention can survive high temperature processes, such as plasma, laser, annealing, and coating, etc., and has a wide range of applications.

The above and other contents of the present invention will be described in detail in the embodiments, which are set forth for the purpose of illustration, but are not intended to limit the scope of the invention.

**Synthesis Example 1 (the materials of the adhesive layer)**

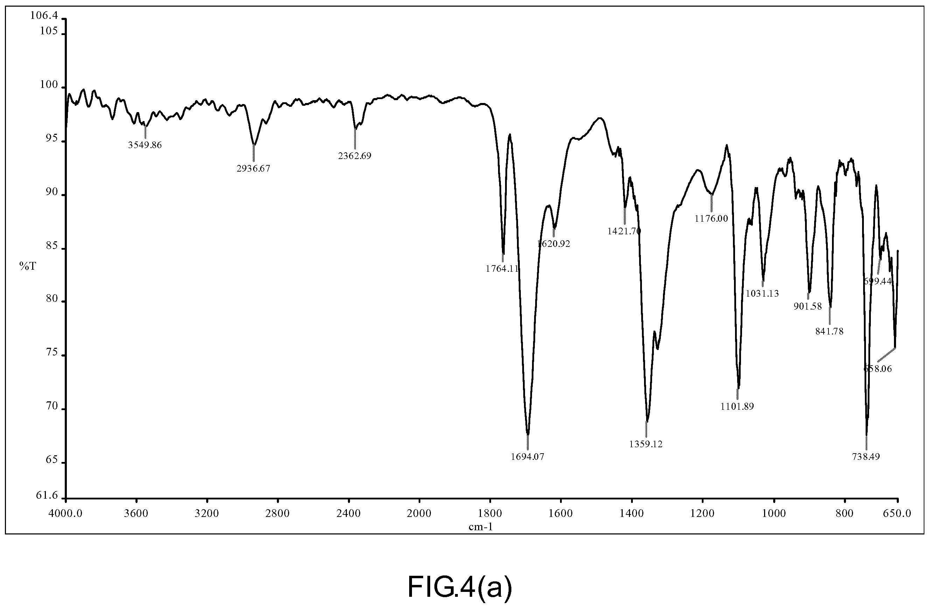

1,4-cyclohexane diamine and 4,4'-biphenyl tetracarboxylic dianhydride were dissolved in N,N-dimethylacetamide and, through thermal imidization, produced a first polyimide polymer (hereinafter referred to as "CHDABP PI"), whose FTIR spectrum was shown in Fig. 4(a).

**Synthesis Example 2 (the materials of the adhesive layer)**

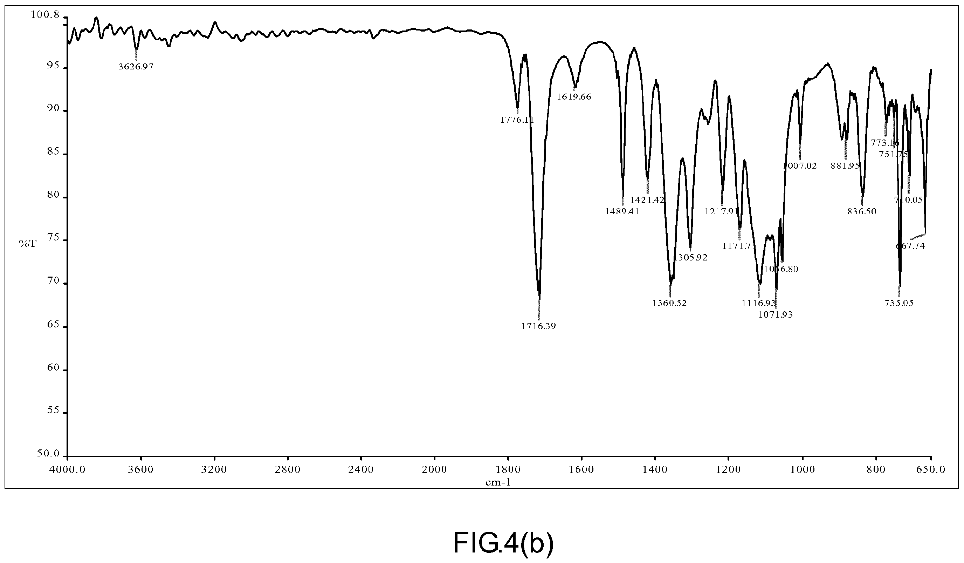

2,2'-bis(trifluoromethyl)benzidine and 4,4'-biphenyl tetracarboxylic dianhydride were dissolved in N,N-dimethylacetamide and, through thermal imidization, produced a second polyimide polymer (hereinafter referred to as "TFMBBP PI"), whose FTIR spectrum was shown in Fig. 4(b).

**Synthesis Example 3 (the materials of the adhesive layer)**

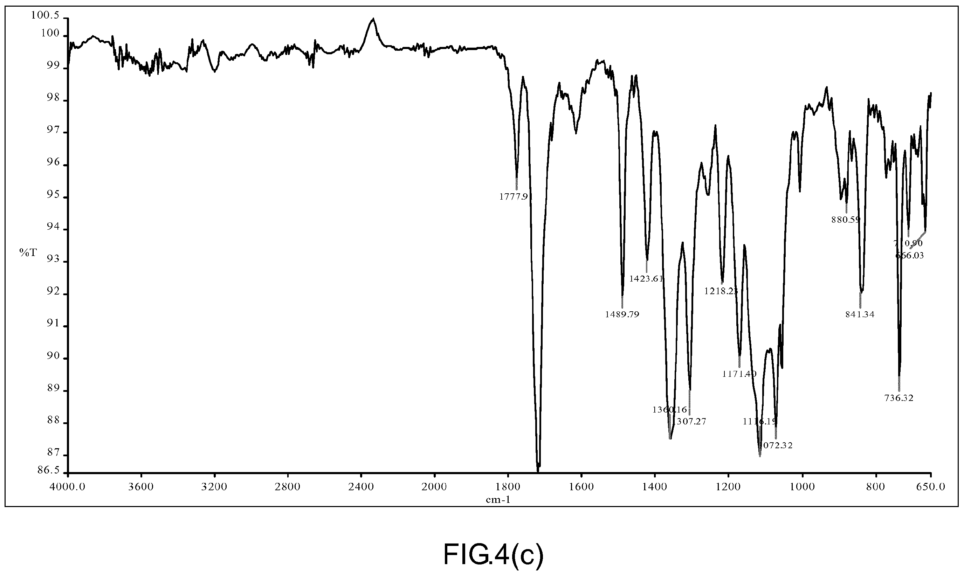

1,4-cyclohexane diamine, 2,2'-bis(trifluoromethyl)benzidine, and 4,4'-biphenyl tetracarboxylic dianhydride were dissolved in N,N-dimethylacetamide, in which the molar ratio of 1,4-cyclohexane diamine to 2,2'-bis(trifluoromethyl)benzidine was 1:1, and a third polyimide polymer (hereinafter referred to as "CH/TFMBBP PI") was produced through thermal imidization. The FTIR spectrum of "CH/TFMBBP PI" was shown in Fig. 4(c).

**Synthesis Example 4 (the materials of the substrate)**

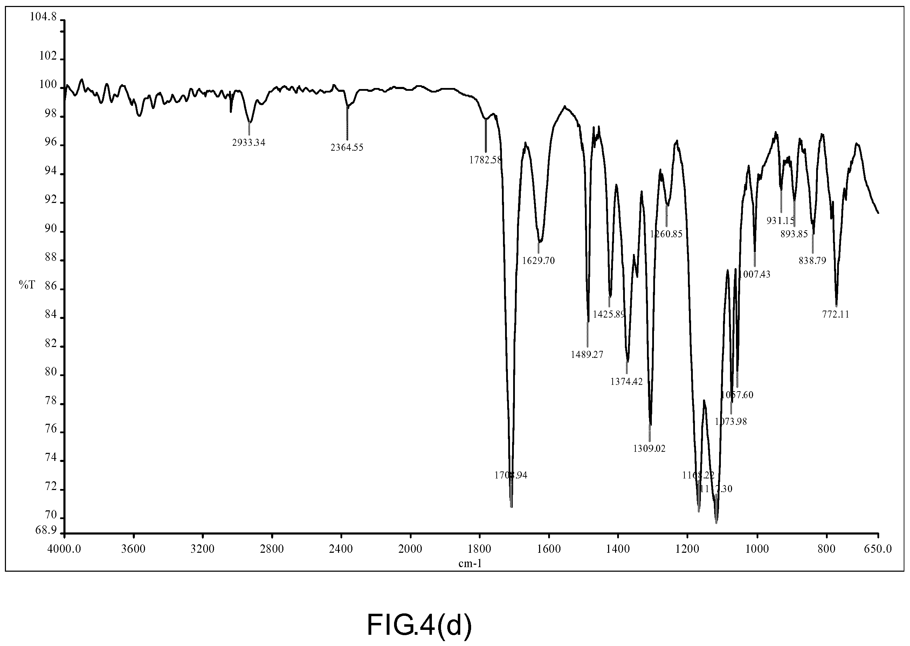

2,2'-bis(trifluoromethyl)benzidine and 1,2,4,5-cyclohexane tetracarboxylic dianhydride were dissolved in N,N-dimethylacetamide, and, through thermal imidization, produced a fourth polyimide polymer (hereinafter referred to as "TFMBCH PI"), whose FTIR spectrum was shown in Fig. 4(d).

**Synthesis Example 5 (the materials of the substrate)**

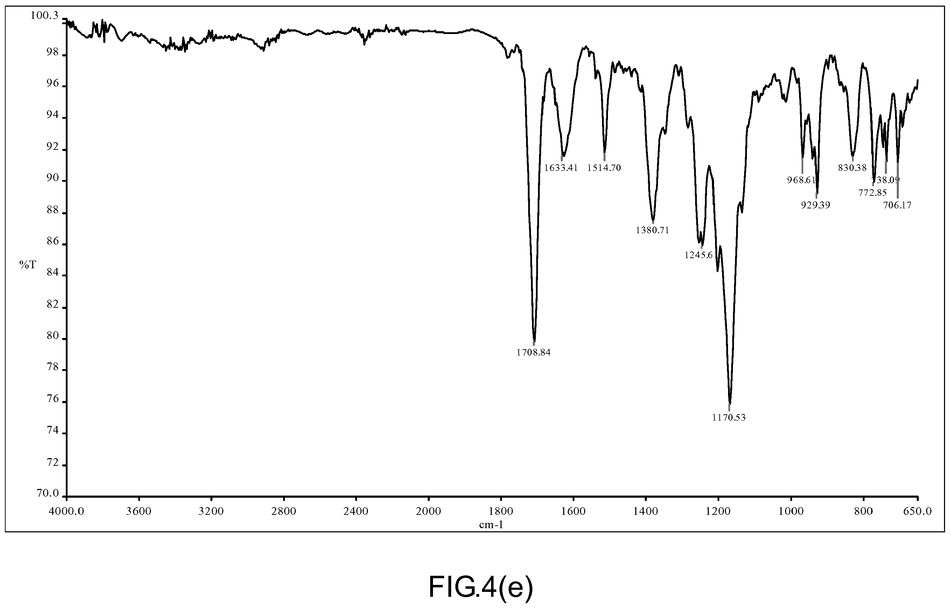

Diamine hexafluoro isopropylidene dianiline and 1,2,4,5-cyclohexane tetracarboxylic dianhydride were dissolved in N,N-dimethylacetamide, and, through thermal imidization, produced a fifth polyimide polymer (hereinafter referred to as "6FCH PI"), whose FTIR spectrum was shown in Fig. 4(e).

**Characteristic analysis of polyimides from Synthesis Examples**

The solubility analysis: the polyimide materials formed in the above Synthesis Examples 1-5 were subjected to solubility tests and the results were listed in Table 1 below:

| Table 1 the solubility tests[a] of the polyimides | | | | | | | |
|---|---|---|---|---|---|---|---|
| | DMAc | NMP | DMSO | m-cresol | DCM | THF | DMF | Acetone |
| CHDABP PI | - | - | - | - | - | - | - | - |
| TFMBBP PI | - | - | - | - | - | - | - | - |
| CH/TFMBBP PI (1:1) | - | - | - | - | - | - | - | - |
| TFMBCH PI | ++ | ++ | ++ | +- | +- | ++ | ++ | ++ |
| 6FCH PI | ++ | ++ | ++ | + | +- | ++ | ++ | ++ |

[a]the solubility tests: 10 mg of test sample was added into 1 mL of solvent.
++, dissolvable at room temperature;
+, dissolvable under heating;
+-, partially dissolvable or swelling;
-, insoluble even under heating.

It can be seen from table 1 that all the materials of the adhesive layers (Synthesis Examples 1-3) were not soluble in a variety of organic solvents.
Analysis of the thermal properties: the polyimide materials formed in the above Synthesis Examples 1-5 were subjected to analysis of the thermal properties and the results were listed in Table 2 below:

| Table2 The analysis of the thermal properties for polyimides | | | | | |
|---|---|---|---|---|---|
| Polymer[a] | $T_g{}^b$ (°C) | $CTE^c$ (ppm/°C) | $T_d{}^5(°C)^d$ | | $R_{w800}{}^e$ |
| | | | $N_2$ | Air | (%) |
| CHDABP PI | 390 | 8 | 480 | 440 | 5.5 |
| TFMBBP PI | 336 | 13.6 | 570 | 564 | 58 |
| CH/TFMBBP PI(1:1) | 324 | 12.5 | 480 | 460 | 14.8 |
| TFMBCH PI | 405 | 78 | 480 | 470 | 28.5 |

(continued)

| Polymer[a] | $T_g{}^b$ (°C) | CTE[c] (ppm/°C) | $T_d{}^5$(°C)[d] | | $R_{w800}{}^e$ |
|---|---|---|---|---|---|
| | | | N$_2$ | Air | (%) |
| 6FCH PI | 347 | 81 | 480 | 460 | 22.8 |

[a] All the polyimide films were subjected to thermal treatment first at 300°C for 1 hr before the analysis of the thermal properties.

[b] The glass transition temperature (Tg) was determined by a thermomechanical analyzer (TMA) in the film/fiber mode with a heating rate of 10°C/min and a constantly applied load of 10mN.

[c] The linear Coefficient of thermal expansion (CTE) between 50 and 200°C was determined by the TMA

[d] The temperature at which 5% of weight was lost ($T_d{}^5$) was determined by Thermogravimetric analyzer (TGA), of which the parameters were set to have 20°C/min of heating rate and 20 cm$^3$/min of gas flow rate.

[e] The remaining weight % at 800°C ($R_{w800}$) in the nitrogen atmosphere was determined by TGA, ans was also known as the char yield.

It could be seen from Table 2 that all the polyimides formed in Synthesis Examples 1-5 of the present invention had a glass transition temperatures (Tg) of higher than 320°C and a 5wt% pyrolysis temperatures ($T_d{}^5$) in the air of higher than 450°C. The flexible and transparent polyimide laminate of the present invention employing those materials described above could survive the processes and treatments at the temperature of 300°C or higher.

Analysis of the optical properties: the polyimide materials formed in the above Synthesis Examples 1-5 were subjected to analysis of the optical properties and the results were listed in Table 3 below:

Table 3 the analysis of the optical properties for polyimides

| Sample[a] | Color space[b] | | | T(%)[c] | | $\lambda_o{}^d$ (n$_m$)[c] |
|---|---|---|---|---|---|---|
| | b* | a* | L* | 400 nm | 550 nm | |
| CHDABP PI | 1.56 | -0.24 | 94.35 | 85 | 87 | 350 |
| TFMBBP PI | 2 | -0.50 | 94.37 | 85 | 87 | 374 |
| CH/TFMBBP PI(1:1) | 1.8 | -0.4 | 94 | 85 | 87 | 360 |
| TFMBCH PI | 0.69 | -0.11 | 96.20 | 90 | 91 | 284 |
| 6FCH PI | 0.89 | -0.05 | 94.46 | 90 | 90.8 | 276 |

[a] The thickness of the polyimide film was about 30 $\mu$m.

[b] CIE1976 color space (or CIEAB)

[c] The transmittances of the films with a thickness of approximately 30 $\mu$m were measured at wavelengths of 400 and 550nm by UV-Vis

[d] cutoff wavelength

It could be seen from Table 3 that the polyimide material of the present invention had high transmittance in the range of visible light. Among the tristimulus values in the CIE color space, all the polyimide films of the present invention were high in color brightness (L* > 93) and low in red/green and yellow/blue chromaticity (both a* value and b* value were close to 0). From the results it was known that all the polyimide materials formed in synthesis Examples 1-5 were nearly colorless and transparent.

**Embodiment 1 - Preparation and tests of the flexible and transparent polyimide laminates**

The following embodiments were prepared by transfer printing, e.g. the process flow as shown in Figs. 3(a) to 3(e). First, a matrix was prepared, and then the matrix was washed and dried by ultrasonic vibration using acetone and cleaner. Next, a layer of silver nanowires/alcohol solution was coated on the surface of the matrix and then dried in a vacuum oven at 80°C to form the preliminary conductive layer. 2,2'-bis(trifluoromethyl)benzidine and 1,2,4,5-cyclohexane tetracarboxylic dianhydride were dissolved in N,N-dimethylacetamide to obtain the polyamic acid (polyimide precursor) PAA/DMAc solution, which was uniformly coated on the surface of the matrix comprising silver nanowires and dried to form a PAA film. Next, the PAA film was heated to 300 °C to undergo thermally ring-closing dehydration and form the organically insoluble polyimide film CHDABP PI (materials of Synthesis Example 1). After that, the highly transparent polyimide TFMBBP PI obtained in Synthesis Example 4 was coated on the organically insoluble polyimide film. Finally, the matrix was removed to form a flexible and transparent polyimide laminate, which included a three-layer structure composed of the silver nanowire conductive layer AgNWs - organically insoluble polyimide CHBPDA PI - highly transparent polyimide TFMBCH PI.

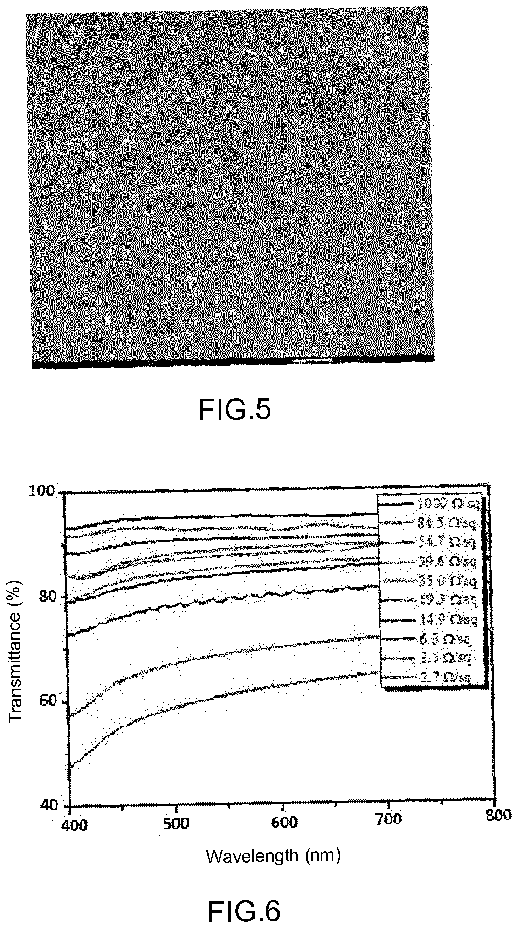

The silver nanowires were prepared by an improved polyol preparation method, which used pure ethylene glycol (EG) as the reducing agent and the solvent, polyvinylpyrrolidone (PVP) as the covering agent, silver nitrate as the source of silver ions, and copper chloride as the deoxidizer. The resulting silver nanowires had a length of about 30-100 microns, a diameter of about 60-100 nm, and an average aspect ratio of more than 600, as shown in Fig. 5.

Further, Fig. 6 was the UV-Vis spectra of the laminates with different conductivities prepared by using the methods described above, showing that the higher the transmittance of the laminate for 550 nm wavelength light, the higher the corresponding sheet resistance of the laminate. However, the transmittance at a particular sheet resistance value could be changed by adjusting the aspect ratio of metal nanowires in the conductive layer. As illustrated above with respect to Fig. 2(a), at the same transmittance level, the increase of the aspect ratio helped to reduce the overall sheet resistance of the laminates.

The relationship between the transparency (transmittance) and the conductivity of the flexible and transparent polyimide laminates of the embodiment could be assessed by using figure of merit (FoM). A figure of merit was an index used to determine the relationship between the transmittance and the conductivity of the transparent and conductive film, and was calculated as follows:

$$FoM = \frac{\sigma_{dc}}{\sigma_{op}(\lambda)} = \frac{Z_0}{2R_S} \frac{\sqrt{T}}{1 - \sqrt{T}}$$

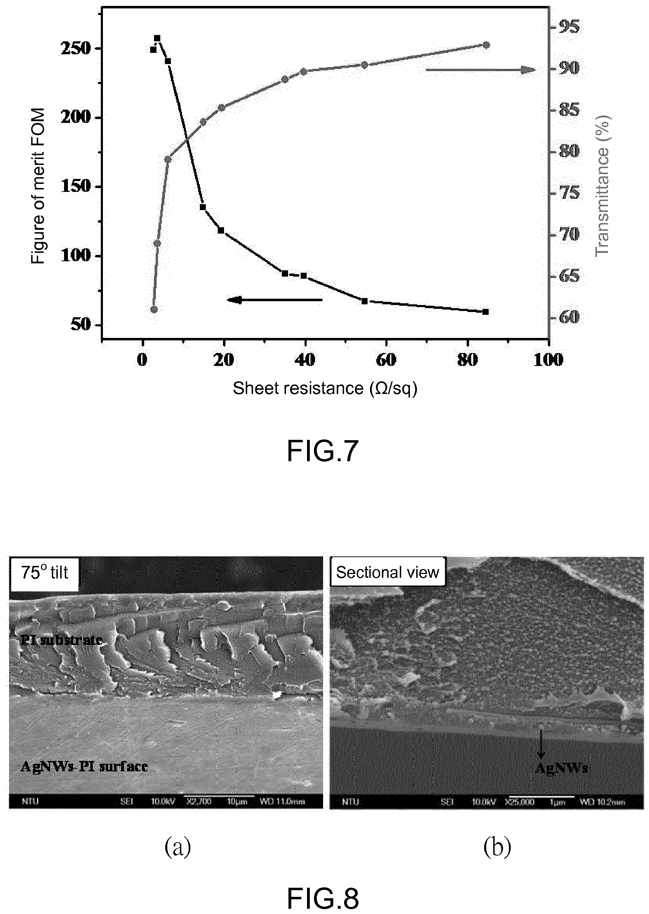

wherein $\sigma_{dc}$ was the DC conductivity of the film; $\sigma_{op}(\lambda)$ referred to the optical conductivity at a wavelength of $\lambda$; $Z_0$ was the impedance of free space (377 $\Omega$); $R_S$ was the sheet resistance; $T$ was the transmittance at the wavelength of $\lambda$. In the industry application, the FoM value was preferably greater than 35 for 550 nm wavelength light. Fig. 7 plotted a chart of the FoM value and the transmittance for 550 nm wavelength light as a function of the sheet resistance of the flexible and transparent polyimide laminate of the present embodiment. The flexible and transparent polyimide laminate prepared in the embodiment had a transmittance of 81% for 550 nm wavelength light and a sheet resistance of 11.1$\Omega$/sq, which resulted in a calculated FoM value of up to 152.83, showing that the laminate had excellent transparency (high transmittance) and conductivity.

In addition, Fig. 8(a) and Fig. 8(b) were SEM images of the flexible and transparent polyimide laminates of the embodiments under different magnifications, showing the dispersity of the silver nanowires in the PI composite film. The flexible and transparent polyimide laminates of the embodiment transfer-printed the conductive layer having the silver nanowires onto the highly transparent polyimide substrate, which made the network structure of the silver nanowires attach to the surface of the substrate uniformly and smoothly. From the SEM sectional view, no warping or peeling phenomenon was found, indicating that there is a strong bonding capacity between the silver nanowires and the organically insoluble polyimide adhesive layer.

**Comparative Example 1**

Comparative Example 1 provided a conventional polyimide laminate, which used organically soluble polyimide (materials of Synthesis Example 5) as the binder to bond the silver nanowires on another polyimide substrate, forming the polyimide laminate. Examples of such laminate can refer to the disclosure of Taiwan Patent Application No. 103137583.

**Chemical Resistance Tests**

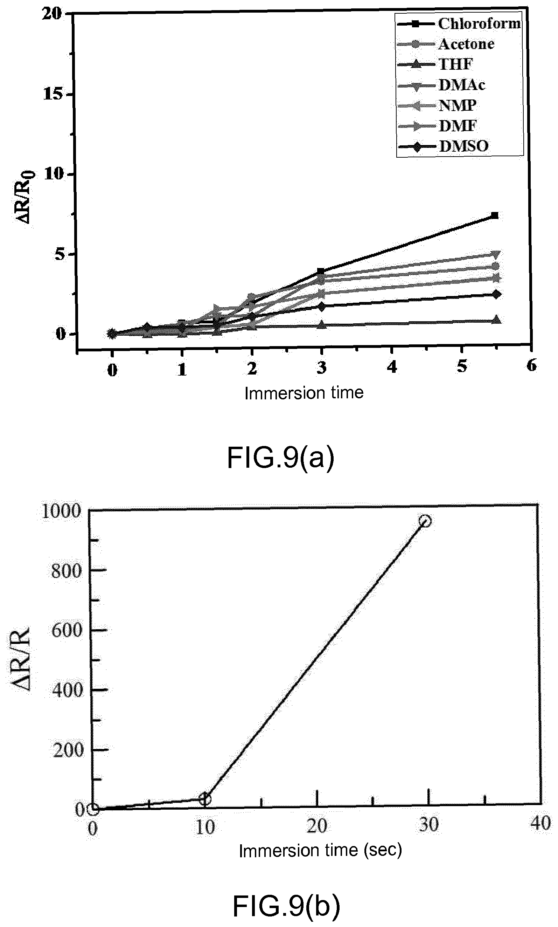

In the flexible and transparent polyimide laminate of Embodiment 1, the organically insoluble polyimide CHDABP PI was used as the binder and the protector for enhancing the subsequent processing capacity of the laminate. Chemical resistance tests immersed the flexible and transparent polyimide laminates of Embodiment 1 in different organic solvents, such as chloroform, acetone, tetrahydrofuran (THF), N,N-dimethylacetamide (DMAc), N-methylpyrrolidone (NMP), N,N-dimethylformamide (DMF) and dimethyl sulfoxide (DMSO), etc. to measure the variations of the sheet resistance, the results of which were shown in Fig. 9(a). The results of the sheet resistance variations for the conventional polyimide laminate of Comparative Example 1 immersed in DMAc were shown in Fig. 9(b). From Figs. 9(a) and 9(b) it was known that the increase rate of the sheet resistance of the flexible and transparent polyimide laminate of Embodiment 1 was less than 50% after being immersed in various kinds of organic solvents for 0.5 hr. However, the sheet resistance of the laminate of Comparative Example 1 increased up to 950 times after being immersed in DMAc for only 30 seconds. The variations of the conductive layer having silver nanowires of the flexible and transparent polyimide laminates of Embodiment 1 were further investigated by SEM after being immersed for 20 hours and were shown in Fig. 4c, indicating that there remained adhesion between the silver nanowires and the substrate, and only a few removal traces of silver nanowires were observed. This result confirmed that the flexible and transparent polyimide laminate of Embodiment 1 had high potential and plasticity in the post-processing applications.

Although the present invention has been illustrated above by way of the embodiments, these embodiments are not intended to limit the invention. Equivalent implementations or changes could be made to these embodiments by those skilled in the art without departing from the scope of the spirit of the invention. Therefore, the scope of the invention should be defined by the appended claims.

**Claims**

1. A flexible and transparent polyimide laminate, comprising:

   a conductive layer comprising a plurality of metal nanowires;
   an adhesive layer made of organically insoluble and transparent polyimide; and
   a transparent polyimide substrate;
   wherein the conductive layer is attached to the transparent polyimide substrate by the adhesive layer, which is formed by dehydration-cyclization of an aromatic dianhydride with one of the following materials: an alicyclic diamine, a fluorine-containing diamine, and a combination thereof.

2. The flexible and transparent polyimide laminate of claim 1, wherein the metal of the metal nanowires is selected from at least one of gold, silver, copper, nickel and titanium.

3. The flexible and transparent polyimide laminate of claim 1, wherein the average aspect ratio of the metal nanowires is greater than 400.

4. The flexible and transparent polyimide laminate of claim 1, wherein the length of the metal nanowires is between 10 $\mu$m and 100 $\mu$m, and the diameter of the metal nanowires is between 20 nm and 100 nm.

5. The flexible and transparent polyimide laminate of claim 1, having a figure of merit of greater than 70 for 550 nm wavelength light.

6. The flexible and transparent polyimide laminate of claim 5, having a transmittance of 80% for 550 nm wavelength light.

7. The flexible and transparent polyimide laminate of claim 1, wherein the thickness of the adhesive layer is between 0.1 and 5 microns, and the yellow chromaticity value b of the adhesive layer is less than 2.

8. The flexible and transparent polyimide laminate of claim 7, wherein the adhesive layer is not soluble in an organic solvent, which includes at least one of N,N-dimethylformamide (DMF), N,N-dimethylacetamide (DMAc), N,N-diethylacetamide, N-methylpyrrolidone (NMP), dimethyl sulfoxide (DMSO), m-cresol, dichloromethane, tetrahydrofuran (THF), chloroform and acetone.

9. A method for manufacturing a flexible and transparent polyimide laminate, comprising:

   coating a matrix with a solution containing a plurality of metal nanowires to form a preliminary conductive layer;
   coating the preliminary conductive layer with a polyamic acid solution, wherein the polyamic acid solution is formed by polymerization of an aromatic dianhydride with one of the following materials: an alicyclic diamine, a fluorine-containing diamine, and a combination thereof;
   heating the polyamic acid solution coated on the preliminary conductive layer to form an adhesive layer by cyclization;
   coating the adhesive layer with polyimide, which is then dried to form a substrate; and
   removing the matrix from the preliminary conductive layer.

10. The method of claim 9, wherein in the step of heating to form the adhesive layer, the heating is carried out until the temperature reaches the annealing temperature of the metal nanowires.

11. The method of claim 9, wherein the metal of the metal nanowires is selected from at least one of gold, silver, copper, nickel and titanium.

12. The method of claim 9, wherein the average aspect ratio of the metal nanowires is greater than 400.

13. The method of claim 9, wherein the length of the metal nanowires is between 10 $\mu$m and 100 $\mu$m, and the diameter of the metal nanowires is between 20 nm and 100 nm.

14. The method of claim 9, wherein the thickness of the adhesive layer is between 0.1 and 5 microns, the yellow chromaticity value b of the adhesive layer is less than 2, and the adhesive layer is not soluble in an organic solvent.

15. The method of claim 14, wherein the organic solvent includes at least one of N,N-dimethylformamide (DMF), N,N-dimethylacetamide (DMAc), N,N-diethylacetamide, N-methylpyrrolidone (NMP), dimethyl sulfoxide (DMSO), m-cresol, dichloromethane, tetrahydrofuran (THF), chloroform and acetone.

100

130

120

110

FIG.1

FIG.2(a)

FIG.2(b)

330

350

## FIG.3(a)

320'

330

350

## FIG.3(b)

320

330

350

## FIG.3(c)

310

320

330

350

## FIG.3(d)

300

330

320

310

## FIG.3(e)

FIG.4(a)

FIG.4(b)

FIG.4(c)

FIG.4(d)

17

EP 3 228 452 A1

FIG.4(e)

FIG.5

FIG.6

FIG.7

(a)                                            (b)

FIG.8

FIG.9(a)

FIG.9(b)

Europäisches
Patentamt

European
Patent Office

Office européen
des brevets

# EUROPEAN SEARCH REPORT

Application Number

EP 17 15 8665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/208704 A1 (UBE IND LTD) 31 December 2014 (2014-12-31) | 1-15 | INV. B32B7/12 |
| Y | * paragraphs [0109] - [0111] * <br> * paragraphs [0060], [0115] * <br> * paragraphs [0047], [0055], [0098] * <br> * the whole document * | 2-4,9-15 | B32B27/28 C09D179/08 |
| Y | EP 0 385 302 A1 (HOECHST CELANESE CORP [US]) 5 September 1990 (1990-09-05) <br> * claim 1 * <br> * page 13, lines 30-32 * <br> * the whole document * | 9-15 | |
| Y | US 2015/017457 A1 (MIZUNO MIKIHISA [JP] ET AL) 15 January 2015 (2015-01-15) <br> * claims 11,14 * <br> * paragraph [0104] * <br> * paragraphs [0089], [0099] * <br> * the whole document * | 2-4, 11-13 | |

TECHNICAL FIELDS
SEARCHED (IPC)

B32B
C09D

The present search report has been drawn up for all claims

| Place of search | Date of completion of the search | Examiner |
|---|---|---|
| The Hague | 17 August 2017 | Yildirim, Zeynep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 228 452 A1**

## ANNEX TO THE EUROPEAN SEARCH REPORT
## ON EUROPEAN PATENT APPLICATION NO.

EP 17 15 8665

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2017

| Patent document cited in search report | | Publication date | Patent family member(s) | | Publication date |
|---|---|---|---|---|---|
| WO 2014208704 | A1 | 31-12-2014 | CN | 105492496 A | 13-04-2016 |
| | | | JP | WO2014208704 A1 | 23-02-2017 |
| | | | KR | 20160024979 A | 07-03-2016 |
| | | | TW | 201512345 A | 01-04-2015 |
| | | | US | 2016137787 A1 | 19-05-2016 |
| | | | WO | 2014208704 A1 | 31-12-2014 |
| EP 0385302 | A1 | 05-09-1990 | CA | 2009085 A1 | 27-08-1990 |
| | | | EP | 0385302 A1 | 05-09-1990 |
| | | | JP | H02269740 A | 05-11-1990 |
| US 2015017457 | A1 | 15-01-2015 | CN | 104160455 A | 19-11-2014 |
| | | | HK | 1204140 A1 | 06-11-2015 |
| | | | JP | 6094270 B2 | 15-03-2017 |
| | | | JP | 2013214507 A | 17-10-2013 |
| | | | KR | 20140108722 A | 12-09-2014 |
| | | | TW | 201401298 A | 01-01-2014 |
| | | | US | 2015017457 A1 | 15-01-2015 |
| | | | WO | 2013133272 A1 | 12-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 103137583